# NOUVEAU FASCICULE DE BREVET EUROPEEN

(11) **EP 1 154 184 B2**
(45) Date de publication et mention de la décision concernant l'opposition: **25.03.2015**
(45) Mention de la délivrance du brevet: 23.04.2008
(21) Numéro de dépôt: 00401278.7
(22) Date de dépôt: 10.05.2000
(51) Int. Cl.: F16L 11/08

(54) **Conduite fléxible à enroulement de fil ou de bande pour le maintien des armures**
Biegsame Leitung mit Wickeldraht oder Wickelband zur Unterstützung der Verstärkungseinlagen
Flexible pipe with rolled wire or band for the support of the reinforcement

(43) Date de publication de la demande: 14.11.2001
(73) Titulaire: Technip France, 92400 Courbevoie (FR)
(72) Inventeur: Espinasse, Philippe, 76420 Bihorel (FR)
(74) Mandataire: Gendron, Vincent Christian

(56) Documents cités:
- WO-A-97/28393
- DE-A- 2 742 918
- FR-A- 2 779 797
- GB-A- 2 332 258
- US-A- 5 645 110

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynamique.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe" and "Specification for Unbonded Flexible Pipe". On pourra aussi se reporter aux documents FR 2 654 795 A, WO 98 / 25 063 A, FR 2 727 738 A, FR 2 744 511 A ou GB 2 332 258 A.

Une conduite flexible comprend généralement de l'intérieur vers l'extérieur :
- un ensemble structurel résistant aux efforts radiaux composé d'une gaine d'étanchéité réalisée en matière plastique, généralement polymère, résistant plus ou moins à l'action chimique du fluide à transporter, et d'un enroulement en hélice à pas court d'un élément métallique ;
- au moins une nappe (et généralement au moins deux nappes croisées) d'armures de traction enroulées à pas long, c'est-à-dire dont l'angle d'armage mesuré sur l'axe longitudinal de la conduite est inférieur à 60°; et
- une gaine de protection et d'étanchéité externe en polymère.

Dans certaines conduites, ledit ensemble structurel est constitué par une carcasse en feuillard agrafé surmontée de ladite gaine.

Dans les conduites à passage lisse, dites "smooth bore", ledit ensemble structurel est constitué par :
- ladite gaine d'étanchéité interne ;
- une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de formes ont une section en Z ou en T ou leurs dérivés (teta ou zeta), en U, ou plus avantageusement en I (cf. document WO 00/09899) ;

Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous pression externe. La voûte de pression participe néanmoins aussi à la résistance à l'écrasement.

Il est connu, par exemple par le document WO 92/11487 an nom de la Demanderesse, de prévoir entre les couches d'armure et la gaine extérieure un ruban adhésif enroulé sur la nappe supérieure pour en faciliter le maintien au moins provisoire lors de la fabrication en attendant la pose de la gaine externe. Ce maintien est d'autant plus nécessaire que les armures sont lubrifiées pour les protéger de la corrosion. Il est également connu d'enrouler autour des armures, après le ruban adhésif, un ruban de kevlar® ou autre matière hautement résistante semblable, destiné à s'opposer aux effets de fond (déformation en cage d'oiseau).

Les systèmes de poses de flexible, illustrés par exemple par le document "Recommended Practice for Design of Risers for floating Production Systems and Tension-leg Platforms", établi par l'American Petroleum Institute, comportent généralement un système de reprise de tension ou tensionneur, à contact linéaire (de type chenille) venant serrer un tronçon de conduite flexible par au moins une paire de bandes sans fin opposées, l'objectif étant de transmettre l'effort de serrage sur la nappe d'armures extérieures. Les forces exercées sont calculées pour tenir compte du coefficient de frottement minimal existant entre les différentes couches de la conduite situées entre le patin de chenille et les armures du flexible : ce coefficient minimal se trouve à l'interface entre la nappe d'armure externe et l'adhésif surjacent, avec une valeur prise en compte inférieure à 0,1. Cette valeur très basse impose de comprimer fortement le flexible afin de pouvoir transmettre des efforts de retenue tangentiels raisonnables. Cette compression axiale forte peut avoir pour conséquence de devoir augmenter la résistance à l'écrasement de la conduite, et donc à renforcer les voûtes de pression ; il en résulte un accroissement du poids suspendu et donc encore une augmentation de la pression radiale à exercer par les tensionneurs !

De plus, les forces exercées par les patins ne doivent pas non plus être trop augmentées au risque de dégrader la gaine au niveau de son contact avec le patin, la limite retenue étant fixée à des forces de l'ordre de 120 tonnes par mètre.

Le but de l'invention est de proposer une conduite flexible dont la structure générale soit celle mentionnée ci-dessus mais qui soit adaptée pour ne pas présenter ces limitations dues au trop faible coefficient de frottement entre la nappe d'armure externe et la couche surjacente (définie autour de la nappe d'armure externe par un enroulement de ruban adhésif et/ou un enroulement d'une bande de matière résistante et/ou la gaine externe elle-même).

Le but de l'invention est atteint grâce à une conduite tubulaire flexible selon la revendication 1. On peut éventuellement recouvrir la nappe d'armure bloquée par l'élément allongé continu spiralé, par du ruban adhésif et/ou un ruban de fibre aramide résistante (par exemple le kevlar®), encore que dans certaines conditions, l'élément allongé continu conforme à l'invention permette de supprimer ces couches. L'élément allongé continu est un fil ou une bande ; dans le premier cas, l'enroulement se fait de manière non jointive ; dans le second cas, l'enroulement se fait avec recouvrement partielle d'une spire de bande sur l'autre. Le fil (ou la bande) augmente le coefficient de frottement à l'interface armure/couche surjacente, d'une valeur inférieure à 0,1 à une valeur qui dépasse 0,2 voire 0,4. En effet, alors que sans le fil de l'invention, l'effort à l'interface entre la nappe d'armure externe et la couche surjacente se transmet par frottement pur, avec le faible coefficient mentionné, ledit effort se transmet, en présence du fil de l'invention, partiellement par accrochage positif (complémentarité de formes) et cisaillement au niveau du fil qui pénètre à la fois dans la nappe d'armures et dans la couche surjacente. Le fil peut aussi servir à empêcher la déformation en cage d'oiseau due à l'effort de fond inverse. On choisit un matériau à la résistance nécessaire et on diminue au besoin le pas d'enroulement pour permettre cet effet. Le fil peut alors remplacer le ruban de Kevlar® utilisé antérieurement à cet effet. L'angle d'enroulement mesuré sur l'axe longitudinal n'est pas critique et est par exemple compris entre environ 50° et 85°.

Le fil spiralé est constitué d'une âme apportant la résistance (en acier, carbone, fibre aramide telle que le kevlar®, etc.) entourée d'une gaine déformable (par exemple en matière thermoplastique).

Grâce à l'invention, il est possible de diminuer les forces de serrage exercées par le patin et/ou de poser des conduites plus lourdes ou plus profondes.

D'autres avantages et caractéristiques seront mis en évidence à la lecture de la description qui suit, en référence aux dessins schématiques annexés représentant à titre d'exemple une forme de réalisation de la conduite flexible selon l'invention. Sur ces dessins :

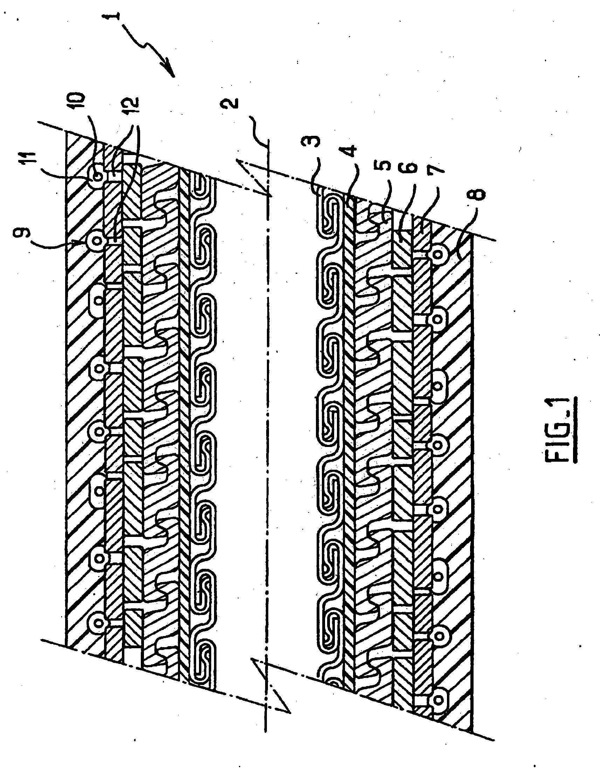

La figure 1 est une vue en coupe longitudinale d'une conduite de type "rough bore" à laquelle est appliquée l'invention ;

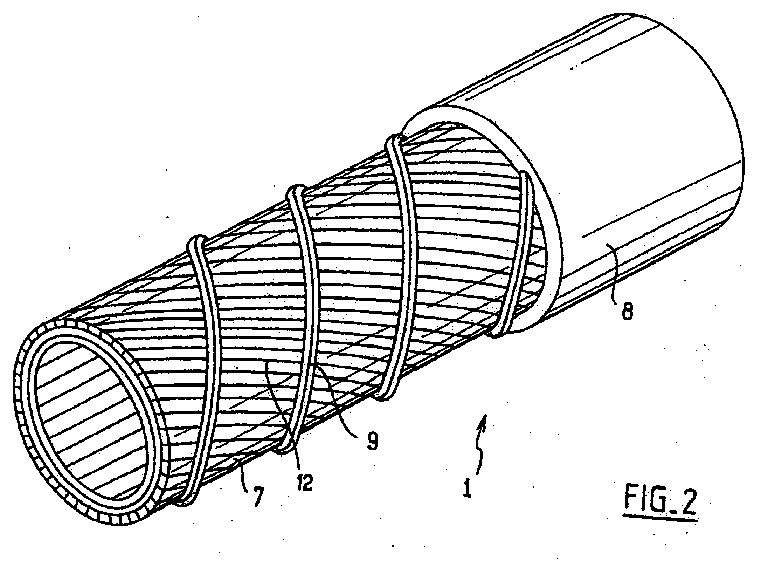

La figure 2 est une vue en perspective simplifiée et partiellement arrachée de la même conduite.

La conduite 1 d'axe 2 comprend de l'intérieur vers l'extérieur une carcasse 3 en feuillard agrafé, une gaine d'étanchéité interne polymérique 4, une voûte métallique 5 constituée par l'enroulement en hélice à pas court d'au moins un fil métallique de forme (ici en zeta auto-agrafé), une armure résistant à la traction axiale dans le sens longitudinal de la conduite et constituée d'une paire de nappes d'armures croisées 6, 7 d'enroulement à pas long en sens contraire, et une gaine d'étanchéité externe polymérique 8. D'autres couches non représentées peuvent être prévues, selon le type et la destination de la conduite, comme par exemple une couche de frette constituée par un enroulement à pas court de fil rectangulaire interposé entre la voûte de pression 5 et la première nappe d'armures 6, d'autres paires de nappes d'armures, et des gaines intermédiaires disposées entre diverses nappes d'armures.

Selon l'invention, on a enroulé sur la nappe d'armures la plus extérieure 7, à pas court, de préférence en sens croisé avec la nappe et avec un certain serrage, un jonc ou fil 9 constitué d'une âme résistante 10 et d'une gaine souple 11 qui rencontre sensiblement transversalement les armures de la nappe 7 et vient pénétrer partiellement dans les déjoints ou jeux hélicoïdaux 12 subsistant entre deux armures. Tous les jeux 12 sont ainsi bloqués par l'enfoncement de la gaine 11 ce qui stabilise les armures. La souplesse de la gaine d'étanchéité 8, constituant la couche surjacente à la nappe d'armure et au fil 9, permet au fil 9 de s'y imprimer au moins partiellement, contribuant au blocage positif et à l'augmentation du coefficient de frottement à l'interface.

## Revendications

1. Conduite tubulaire flexible comprenant au moins, de l'intérieur vers l'extérieur : un ensemble structurel étanche résistant aux efforts radiaux composé d'une gaine d'étanchéité interne (4) réalisée en matière plastique, généralement polymère, résistant plus ou moins à l'action chimique du fluide à transporter, et d'un enroulement (3, 5) en hélice à pas court d'un élément métallique ; au moins une nappe d'armures de traction (6, 7) enroulées à pas long et une gaine de protection et d'étanchéité externe (8), **caractérisée en ce qu'**au moins un élément allongé continu (9) résistant à enveloppe déformable est enroulé hélicoïdalement à pas court directement sur ladite nappe d'armure (7) de manière que l'enveloppe de l'élément allongé continu (9) s'insère partiellement dans les déjoints (12) entre les armures de ladite nappe (7), l'élément allongé continu (9) comportant une âme résistante (10) entourée d'une gaine déformable (11), et **en ce que** l'élément allongé continu est un fil, le fil (9) étant enroulé de manière non jointive, ou **en ce que** l'élément allongé continu est une bande, la bande étant enroulée à chevauchement, l'enveloppe de l'élément allongé continu (9) s'imprimant partiellement dans la gaine externe (8).

2. Conduite selon la revendication 1, **caractérisée en ce que** l'élément allongé continu (9) est enroulé dans un sens d'enroulement opposé à celui de la nappe d'armure (7).

3. Conduite selon l'une quelconque des revendications précédentes, **caractérisée en ce qu'**on enroule sur la nappe d'armure (7) bloquée par ledit élément allongé continu (9) un ruban adhésif et/ou un ruban de fibre aramide résistante.

4. Conduite selon l'une quelconque des revendications précédentes, **caractérisée en ce que** l'ensemble structurel est constitué par une gaine d'étanchéité interne (4), une voûte de pression cylindrique (5) constituée par l'enroulement en hélice à pas court d'un fil métallique de forme agrafé.

5. Conduite selon l'une quelconque des revendications précédentes, **caractérisée en ce que** l'ensemble structurel est constitué par une carcasse en feuillard agrafé (3) surmontée d'une gaine d'étanchéité interne (4).

## Patentansprüche

1. Biegsame Rohrleitung mit von innen nach außen gesehen mindestens :einer dichten strukturellen Anordnung, die gegenüber radialen Belastungen widerstandsfähig ist, bestehend aus einem inneren Dichtungsmantel (4) aus Kunststoff, im Allgemeinen Polymer, der gegenüber der chemischen Wirkung des zu transportierenden Fluids mehr oder weniger widerstandsfähig ist; und einem mit kleiner Gangart spiralförmig gewickelten, Metallelement (3, 5); mindestens einer Schicht aus Zugbewehrungen (6, 7), die mit großer Gangart gewickelt sind, und einem äußeren Schutz- und Dichtungsmantel (8), dadurch, gekennzeichnet, dass mindestens ein widerstandsfähiges, · langgezogenes, ununterbrochenes Element (9) mit verformbarer Bewicklung mit kleiner Gangart spiralförmig direkt auf die Bewehrungsschicht (7) gewickelt ist, derart, dass die Bewicklung des langgezogenen, ununterbrochenen Elements (9) teilweise in die Fugen (12) zwischen den Bewehrungen der Schicht (7) eintritt, wobei dass das langgezogene, ununterbrochen Element (9) eine widerstandsfähige Seele (10) enthält, die von einem verformbaren Mantel (11) umgeben ist, und dass das langgezogene, ununterbrochene Element ein Draht ist, wobei der Draht (9) nicht "Stoß an Stoß" gewickelt ist, oder dass das langgezogene ununterbrochene Element ein Band ist, wobei das Band überlappend gewickelt ist, wobei sich die Bewicklung des langgezogenen, ununterbrochenen Elements (9) teilweise in den äußeren Mantel (8) eindrückt.

2. Leitung nach Anspruch 1, **dadurch gekennzeichnet, dass** das langgezogene, ununterbrochene Element (9) in einer Wickelrichtung gewickelt ist, die der der Bewehrungsschicht (7) entgegengesetzt ist.

3. Leitung nach einem der vorangegangenen Ansprüche, **dadurch gekennzeichnet, dass** auf die Bewehrungsschicht (7), die durch das langgezogene, ununterbrochene Element (9) gesperrt ist, ein Klebeband und/oder ein Band aus widerstandsfähigen Aramidfasern gewickelt wird.

4. Leitung nach einem der vorangegangenen Ansprüche, **dadurch gekennzeichnet, dass** die strukturelle Anordnung aus einem inneren Dichtungsmantel (4), einem zylindrischen Druckgewölbe (5), das von einem mit kleiner Gangart spiralförmig gewickelten Metalldraht mit geklammerter Form gebildet ist, besteht.

5. Leitung nach einem der vorangegangenen Ansprüche, **dadurch gekennzeichnet, dass** die strukturelle Anordnung aus einem Gerippe aus geklammertem Band (3) besteht, das von einem inneren Dichtungsmantel (4) überragt wird.

## Claims

1. Flexible tubular pipe comprising, from the inside outwards, at least: a sealed structural assembly resistant to radial forces, composed of an internal sealing sheath (4) made of a plastic, generally a polymer, able to withstand to a greater or lesser extent the chemical action of the fluid to be transported, and of a winding (3, 5) of a metal element wound in a helix with a short pitch; at least one ply of tensile armour wires (6, 7) wound with a long pitch and an external protective sealing sheath (8), **characterized in that** at least one strong continuous elongate element (9) with a deformable jacket is wound helically with a short pitch directly around the said armour ply (7) so that the jacket of the continuous elongate element (9) is partially inserted into the gaps (12) between the armour wires of the said ply (7), the continuous elongate element (9) having a strong core (10) surrounded by a deformable sheath (11), and **in that** the continuous elongate element is a wire, the wire (9) being wound with non-touching turns, or **in that** the continuous elongate element is a tape, the tape being wound with overlapping turns, the jacket of the continuous elongate element (9) being partially impressed into the external sheath (8).

2. Pipe according to Claim 1, **characterized in that** the continuous elongate element (9) is wound in the opposite winding direction to that of the armour ply (7).

3. Pipe according to any one of the preceding claims, **characterized in that** an adhesive tape and/or a strong aramid fibre tape is wound over the armour ply (7) blocked by the said continuous elongate element (9).

4. Pipe according to any one of the preceding claims, **characterized in that** the structural assembly consists of an internal sealing sheath (4) and a cylindrical pressure vault (5) consisting of the winding of an interlocked profiled metal wire wound in a helix with a short pitch.

5. Pipe according to any one of the preceding claims, **characterized in that** the structural assembly consists of a carcass made of an interlocked metal strip (3) surmounted by an internal sealing sheath (4).
